# EUROPÄISCHE PATENTANMELDUNG

(11) **EP 3 611 237 A1**
(43) Veröffentlichungstag der Anmeldung: **19.02.2020**
(21) Anmeldenummer: 19190175.0
(22) Anmeldetag: 06.08.2019
(51) Int. Cl.: C09J 5/00, C09J 7/10, B21D 39/02, B62D 27/02

(54) **VERFAHREN ZUR HERSTELLUNG EINER VERSIEGELTEN FALZVERBINDUNG**

(30) Priorität: 16.08.2018 DE 102018213824
(71) Anmelder: tesa SE, 22848 Norderstedt (DE)
(72) Erfinder: Mette, Christoph, 22301 Hamburg (DE); Tuffe, David, 22851 Norderstedt (DE); Keite-Telgenbüscher, Klaus, 22529 Hamburg (DE)

(57) **Zusammenfassung**

Verfahren zur Herstellung einer mittels einer Klebemasse versiegelten Falzverbindung zwischen einem ersten Flächenelement (1), das im Falz außen zu liegen kommt, und einem zweiten Flächenelement (2), das im Falz innen zu liegen kommt, wobei ein Flansch (10) des ersten Flächenelementes (1) über einen Flansch (20) des zweiten Flächenelementes (2) zurückgeschlagen wird und wobei der Flansch (10) des ersten Flächenelements eine erste Fläche (11) und eine zweite Fläche (12) und wobei der Flansch (20) des zweiten Flächenelements (2) eine erste Fläche (21) und eine zweite Fläche (22) aufweist, umfassend die Schritte:
(I) Verkleben des Flansches (20) des zweiten Flächenelements mit zumindest einer Schicht einer Klebemasse (30) auf dem Flansch (10) des ersten Flächenelementes (1), derart, dass das Ende (23) des Flansches (20) des zweiten Flächenelements (2) um einen Abstand (A) gegenüber dem Ende (13) des Flansches (10) des ersten Flächenelements (1) eingerückt ist;
(II) Bördeln des Flansches (10) des ersten Flächenelementes (1) um den Flansch (20) des zweiten Flächenelementes (2), wobei nach der Bördelung des Schritt (II) ein Teil (31) der Klebmasse (30) um einen Abstand (a) des Flansches (10) des ersten Flächenelementes (1) aus dem Bördelrand herausragt und zumindest im Bereich des Klebemassenteils (31) die an dem Flansch (20) anliegende Oberfläche (32) der Klebmasse (30) weniger klebrig ist als die benachbarte, Oberfläche (33) der Klebmasse (30), die innerhalb des Bördelrands liegt,
(III) nach der Bördelung des Schritt (II) der Klebemassenteil (31) um den Rand (13) des ersten Flansches (10) des ersten Flächenelements (1) gelegt und auf der zweiten Fläche (12) des Flansches (10) des ersten Flächenelementes (1) verklebt wird.

## Beschreibung

Die vorliegende Erfindung betrifft ein Verfahren zur Herstellung einer mittels einer Klebemasse versiegelten Falzverbindung zwischen einem ersten Flächenelement, das im Falz außen zu liegen kommt, und einem zweiten Flächenelement, das im Falz innen zu liegen kommt, wobei ein Flansch des ersten Flächenelementes über einen Flansch des zweiten Flächenelementes zurückgeschlagen wird und wobei der Flansch des ersten Flächenelements eine erste Fläche und eine zweite Fläche aufweist, umfassend die Schritte:
(I) Aufbringen von zumindest einer Schicht einer Klebemasse auf den Flansch des ersten Flächenelementes;
(II) Bördeln des Flansches des ersten Flächenelementes um den Flansch des zweiten Flächenelementes,
sowie eine durch dieses Verfahren erhältlich Falzverbindung, die Verwendung eines Klebebandes zur Herstellung einer mittels einer Klebemasse versiegelten Falzverbindung und ein doppelseitiges Klebeband zur Herstellung einer versiegelten Falzverbindung.

Eine Falzverbindung zwischen zwei Platten wird erzeugt, indem ein verlängerter Kantenabschnitt einer Platte über einen Kantenabschnitt der anderen Platte zurückgeschlagen wird. Das Ergebnis des Falzens wird als Falz- oder Bördelnaht oder Bördelrand bezeichnet, die Verbindung als Falz- oder Bördelrandverbindung. In Fahrzeugkarosserien kann man Falzverbindungen an verschiedenen Stellen finden, wo zwei Platten miteinander verbunden sind, zum Beispiel an Türen, Kofferraumdeckeln und Motorhauben. Eine Fahrzeugtür kann beispielsweise aus einer Innenplatte und einer Außenplatte hergestellt werden, die entlang ihrer Außenkanten über eine Falzverbindung verbunden sind, die durch Umschlagen des verlängerten Kantenabschnitts der Außenplatte über den Kantenabschnitt der Innenplatte zum Erzeugen einer überlappenden Verbindungsstelle und Verquetschen der Kanten miteinander hergestellt wird. Es wird dann eine Dichtung zwischen dem Rand der äußeren Platte und der angrenzenden Oberfläche der Innenplatte benötigt, um Feuchtigkeit aus dem Raum zwischen den Platten herauszuhalten und Korrosion zu verhindern.

Wird die Falz- oder Bördelrandverbindung abgedichtet, spricht man von einer Bördelfalzversiegelung oder - bei der Verwendung von Klebstoff - auch von einer Bördelrandverklebung.

Die Verklebung beziehungsweise das Abdichten von Blechteilen im Fahrzeugbau, insbesondere bei Karosserien von Automobilen, wird häufig an Rohblechteilen vorgenommen. Die Aushärtung der hierbei eingesetzten Kleb-/Dichtstoffe erfolgt später in den Lacktrockenöfen. Vorher durchlaufen die verklebten beziehungsweise abgedichteten Teile Reinigungs-, Phosphatier- und Tauchgrundierungsstufen. Durch die in diesen Stufen verwendeten Behandlungsmittel können die Kleb- beziehungsweise Dichtmittel aus den Klebefugen gespült werden. Um diesen Anforderungen gerecht zu werden, sind verschiedene Vorgehensweisen bekannt geworden, zum Beispiel eine thermisch/induktive Vorhärtung von niedrigviskosen, pastösen Kleb-/Dichtstoffen, die Verwendung von Klebstoffen in Form von lösungsmittelhaltigen Zusammensetzungen oder Hotmelts als Zweikomponenten-Produkte oder auch als Formteile, die in der Regel manuell appliziert werden und zum Zeitpunkt der Applikation eine Eigenklebrigkeit besitzen.

### Stand der Technik:

Bei der Bördelfalzversiegelung im Kraftfahrzeugbau wird üblicherweise über den nach außen offenen Bereich des Falzes ein aushärtbares Material insbesondere in Form einer Raupe gelegt, das in einem ersten Härtungsprozess, beispielsweise induktive Erwärmung des Bleches im Bereich der härtbaren Masse, geliert und in einem nachgeschalteten Härtungsprozess, insbesondere dem KTL-Ofen, vollständig ausgehärtet wird. Als härtbare Masse kommt hier insbesondere PVC zum Einsatz. Dieses Verfahren bereitet dann Probleme, wenn das härtbare Material Lufteinschlüsse überdeckt oder vor der endgültigen Härtung Flüssigkeiten oder Gase aufgenommen hat, die sich bei der späteren Ofenhärtung ausdehnen und nach außen sichtbare Blasen bilden. Diese Blasen stören zum einen die Optik (optische Einbußen) und bilden zum anderen Schwachstellen der Versiegelung gegen korrosive Angriffe.

In einer alternativen Fertigung bei der Herstellung von Fahrzeuganbauteilen, zum Beispiel von Türen, Heck- und Frontklappen, Schiebedachdeckeln etc., werden zwei Blechteile mittels Falzen verbunden. Dabei wird im Karosserie-Rohbau zuerst ein Klebstoff auf das beölte Metallblech, meistens bestehend aus Stahl, feuerverzinktem bzw. elektroverzinktem Stahl, Magnesium oder Aluminium, entlang der Kante des Außenteiles zum Beispiel mittels Extrudier-, Spritz - oder Sprühverfahren in einer Schichtstärke von zum Beispiel 0.2 mm aufgetragen, und nach Einlegen des Innenteiles wird die Außenkante des Außenteiles um die Peripherie des Innenteiles gebördelt. Die korrosionsgefährdete Kante des Außenteiles wird erst danach im Lackierprozess meistens von Hand mit einem Dichtstoff, wie zum Beispiel PVC-Plastisole, versiegelt.

WO 2011/020714 A offenbart eine Klebemassezusammensetzung auf der Basis von Kautschuken, die gleichzeitig als Bördelnahtversiegelung eingesetzt werden kann. Es handelt sich um eine pastose Zusammensetzung, die mittels Spritz-, Extrusions- oder Sprühverfahren aufgetragen werden kann. Dies ist auch der Nachteil dieser Masse, da leicht Auftragsfehler und Ausquetschungen entstehen können, die das optische Erscheinungsbild der Bördelnaht beeinträchtigen.

Weiterhin sind pastose oder flüssige Zubereitungen generell empfindlicher gegenüber Auswaschungen in den verwendeten Reinigungs- und Beschichtungsbädern als höherviskose Klebebänder.

In EP 1 041 130 A wird dieser Nachteil durch ein Verfahren abgemildert, bei dem die Härtung der Versiegelungs- bzw. Klebmasse mehrstufig durchgeführt wird. Nachteilig ist der hohe Aufwand für die chemische Implementierung mehrerer Härtungsmechanismen innerhalb der Zusammensetzung sowie für die Durchführung mehrerer unterschiedlicher Härtungsverfahren.

EP 1 334 161 A offenbart ein Verfahren zum Herstellen und Verstärken einer Verbindung, das die folgenden Schritte aufweist:
a) Bereitstellen von zwei Substraten, zwischen denen ein mit einer Verbindung zu versehender Abstand vorliegt;
b) direktes Zuführen eines separaten heißschmelzenden wärmehärtenden Materials in der Nähe des Abstands;
c) Erwärmen des Materials, um zu bewirken, dass das Material in den definierten Bereich oder Abstand fließt, diesen füllt und aushärtet, um die Substrate zu verbinden, wobei das Material bevorzugt in Form eines Stabes zugeführt wird. Nachteilig ist hierbei der hohe Aufwand für das Aufschmelzen des Materials vor dem Fließen in die Klebefuge. Auch besteht die Gefahr, dass die Klebefuge nicht vollständig gefüllt wird und Lufteinschlüsse verbleiben.

US 4,719,689 A offenbart ein Verfahren zur gleichzeitigen Verklebung und Abdichtung einer Bördelnaht, bei dem das Bördelwerkzeug mit einer Aussparung versehen ist, mittels derer der aus der Bördelnaht austretende Klebstoff zu einer optisch ansprechenden Abdichtungsschicht geformt wird. Nachteilig ist, dass bei einer ungenau dosierten oder platzierten Klebstoffmenge die Aussparung unter- oder überfüllt wird, was die Dichtungsfunktion und das Erscheinungsbild beeinträchtigen kann.

Eine weitere Lösung zur Vermeidung der Nachteile von flüssigen und/oder pastösen Klebstoffen bzw. Dichtmassen besteht in der Verwendung von Klebebändern zur Bördelfalzverklebung bzw. -versiegelung.

US 6,000,118 A offenbart einen vorgeformten Klebemassestreifen, der während des Bördelns verquetscht wird. Dies birgt - wie bei Klebstoffraupen - die Gefahr des Ausquetschens.

EP 0 830 530 A offenbart einen Dichtungsstreifen, der für die Abdichtung einer Verbindungsstelle zwischen zwei Oberflächen geeignet ist, die aneinandergrenzend im allgemeinen in parallelen Ebenen liegen, zum Beispiel Oberflächen (wie Platten) die aneinanderstoßen, oder einander überlappen. Die Erfindung ist insbesondere, aber nicht ausschließlich, auf einen Dichtungsstreifen anwendbar, der für das Abdichten einer Falzverbindung geeignet ist, wie man sie bei einer Fahrzeugkarosserie finden kann. Dabei weist der Dichtungsstreifen eine Innenoberfläche zur Befestigung des Streifens über der Verbindung und eine gerundete, formhaltige Außenoberfläche auf; wobei das Profil des Streifens so ist, dass sich die Außenoberfläche des Streifens, wenn der Streifen in seiner Position über der Verbindungsstelle befestigt ist, von einer der aneinandergrenzenden Oberflächen zu der anderen erstreckt. Nachteilig an dieser Lösung sind die aufwendige Vorformung der Außenoberfläche des Streifens sowie der notwendige mehrschichtige Aufbau.

EP 1 451 010 A und WO 2004/108401 A offenbaren in ähnlicher Weise ein Flanschprofil-Dichtungsmaterial, das mindestens zwei Schichten aufweist für das Abdichten eines Flanschprofils von Blechen in einem Fahrzeug, wobei das Flanschprofil-Dichtungsmaterial dadurch gekennzeichnet ist, dass es eine innere Schicht, die ein heißschmelzendes/fließendes wärmehärtendes Harz mit einer Aushärttemperatur von 80 bis 200 °C enthält, und eine äußere Schicht aufweist, welche keine wesentliche Fließ-/ Formveränderung bei 80 bis 200 °C zeigt, wobei das heißschmelzende/fließende wärmehärtende Harz verflüssigt werden und dann ausgehärtet werden kann, um eine Dichtung auszubilden. Das Dichtungsmaterial wird äußerlich komplett um den bereits hergestellten Flansch herumgeformt. Es nimmt somit nur eine Dichtungsfunktion wahr und keine wesentliche mechanische Verbindungsfunktion (Verklebung).

WO 2012/166257 A offenbart ein Verfahren zur Herstellung einer Falzverbindung, bei dem ein Klebeband zunächst auf das innere oder äußere Blech der Falzverbindung appliziert wird, sodann das äußere Blech um das innere Blech herumgeschlagen wird, so dass das Klebeband vollständig zwischen äußerem und innerem Blech der Falzverbindung zu liegen kommt, und sodann das Klebeband ausgehärtet wird. Mit diesem Verfahren wird eine Bördelnahtverklebung hergestellt. Nachteilig ist, dass bei der Verklebung die Kante des äußeren Falzbleches ungeschützt bleibt und in einem weiteren Arbeitsgang versiegelt werden muss.

WO 2009/071269 A offenbart das Aufbringen zweier Klebebänder (siehe dort Fig. 2) auf eines der Flanschbleche. Beim nachfolgenden Bördeln wird das Klebeband aus der Bördelfuge herausgequetscht und bildet eine Abdichtung sowohl zur inneren wie auch zur äußeren Seite des Falzes. Trotz Verwendung eines Klebebands findet hier wie beim Flüssigklebstoff ein erheblicher Fließprozess statt, der die o.g. Nachteile birgt.

Mit der Technologie der DE 10 2016 220 237 A sollte die Aufgabe gelöst werden, ein Verfahren zum gleichzeitigen Verkleben und Versiegeln einer Falzverbindung zur Verfügung zu stellen, das mit geringem Aufwand durchgeführt werden kann und eine gegenüber dem Stand der Technik optisch verbesserte Siegelnaht ergibt. Hierzu wurde die Klebemasse auf beiden Flächen des Flansches des ersten Flächenelementes aufgebracht und nach der Herstellung der Falzverbindung die Klebemasse auf der ersten Fläche mit der Klebemasse auf der zweiten Fläche des Flansches des ersten Flächenelementes am Rand des Flansches eine kontinuierliche Schicht ausgebildet, die den Rand des Flansches des ersten Flächenelements bedeckt. Dabei wurde vor der Falzbildung ein Klebestreifen um den ersten Flansch herumgeklebt, so dass er beide Oberflächen des ersten Flansches zumindest teilflächig bedeckt.

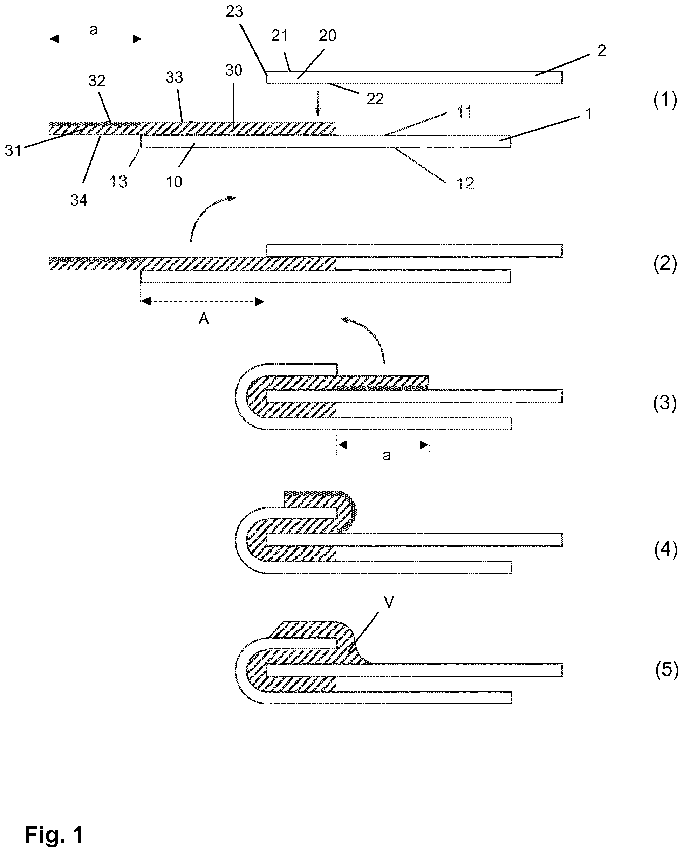

Ein Nachteil bei dieser Verfahrensweise ergibt sich jedoch daraus, dass das Umfalzen des ersten Flansches um den zweiten Flansches mittels Druckbeaufschlagung auf den ersten Flansch geschieht, in den Figuren, wie sie dort gezeigt sind, insbesondere auf die untere Fläche des ersten Flansches. Dies hat zur Folge, dass die dort befindliche Klebemasse zusammen- oder fortgedrückt und/oder zerquetscht wird, so dass das gewünschte Ergebnis einer sauber abgedichteten Falzverbindung (vgl. beispielweise die dortigen Figuren 1.4, 2.4 und 3.4) nicht hinreichend befriedigend erzielt wird. Zudem kommt es in dem umgebogenen Klebeband zu erheblichen Zugspannungen, die zu Verzerrungen, Rissen und dergleichen im Klebeband führen und die schlussendlich beabsichtigte Versiegelung nachteilig beeinflussen.

Aufgabe der vorliegenden Erfindung war es daher, den Falzprozess zu optimieren. Insbesondere sollten die zur Abdichtung verwendeten Klebeelemente bei der Falzbildung nicht übermäßig beeinträchtigt werden.

Gelöst werden konnte die Aufgabe durch ein Verfahren, wie es im Hauptanspruch der vorliegenden Schrift beschrieben wird.

Dementsprechend betrifft die Erfindung ein Verfahren zur Herstellung einer mittels einer Klebemasse versiegelten Falzverbindung zwischen einem ersten Flächenelement (1), das im Falz außen zu liegen kommt, und einem zweiten Flächenelement (2), das im Falz innen zu liegen kommt, wobei ein Flansch (10) des ersten Flächenelementes (1) über einen Flansch (20) des zweiten Flächenelementes (2) zurückgeschlagen wird und wobei der Flansch (10) des ersten Flächenelements eine erste Fläche (11) und eine zweite Fläche (12) und wobei der Flkansch (20) des zweiten Flächenelements (2) eine erste Fläche (21) und eine zweite Fläche (22) aufweist, umfassend die Schritte:
(I) Verkleben des Flansches (20) des zweiten Flächenelements mit zumindest einer Schicht einer Klebemasse (30) auf dem Flansch (10) des ersten Flächenelementes (1), derart, dass das Ende (23) des Flansches (20) des zweiten Flächenelements (2) um einen Abstand (A) gegenüber dem Ende (13) des Flansches (10) des ersten Flächenelements (1) eingerückt ist;
(II) Bördeln des Flansches (10) des ersten Flächenelementes (1) um den Flansch (20) des zweiten Flächenelementes (2),
wobei nach der Bördelung des Schritt (II) ein Teil (31) der Klebmasse (30) um einen Abstand (a) des Flansches (10) des ersten Flächenelementes (1) aus dem Bördelrand herausragt,
wobei zumindest im Bereich des Klebemassenteils (31) - im Folgenden auch als "überstehender Teil (32) der Klebmasse (30)" beziehungsweise "überstehender Klebmassenteil (32)" bezeichnet - die an dem Flansch (20) anliegende Oberfläche (32) der Klebmasse (30) weniger klebrig ist als die benachbarte, Oberfläche (33) der Klebmasse (30), die innerhalb des Bördelrands liegt,
wobei in einem Schritt
(III) nach der Bördelung des Schritt (II) der Klebemassenteil (31) um den Rand (13) des ersten Flansches (10) des ersten Flächenelements (1) gelegt und auf der zweiten Fläche (12) des Flansches (10) des ersten Flächenelementes (1) verklebt wird,
so dass nach der Herstellung der Falzverbindung die Klebemasse auf der ersten Fläche (11) mit der Klebemasse auf der zweiten Fläche (12) des Flansches (10) des ersten Flächenelementes (1) am Rand (13) des Flansches (10) eine kontinuierliche Schicht ausbildet, die den Rand (13) des Flansches (10) des ersten Flächenelements bedeckt.

In einer ersten bevorzugten Ausführungsvariante des erfindungsgemäßen Verfahrens wird im Schritt (I) die Klebemasse (30) zunächst so auf der ersten, in der Falzverbindung innen liegenden Fläche (11) des Flansches (10) des ersten Flächenelementes (1) aufgebracht wird, dass ein Teil (31) der Klebemasse (30) den Rand (13) des Flansches (10) des ersten Flächenelementes (1) um den Abstand (a) überragt,
wobei zumindest im Bereich des Klebemassenteils (31) die dem Flansch (10) abgewandten Oberfläche (32) der Klebmasse (30) weniger klebrig ist als die benachbarte, nicht im Bereich des Klebemassenteils (31) liegende, dem Flansch (10) abgewandte Oberfläche (33) der Klebmasse (30).
Das Verfahren zur Herstellung einer mittels einer Klebemasse versiegelten Falzverbindung zwischen einem ersten Flächenelement (1), das im Falz außen zu liegen kommt, und einem zweiten Flächenelement (2), das im Falz innen zu liegen kommt, wobei ein Flansch (10) des ersten Flächenelementes (1) über einen Flansch (20) des zweiten Flächenelementes (2) zurückgeschlagen wird und wobei der Flansch (10) des ersten Flächenelements (1) eine erste Fläche (11) und eine zweite Fläche (12) aufweist, ist dann ein solches umfassend die Schritte:
(I) Aufbringen von zumindest einer Schicht einer Klebemasse (30) auf den Flansch (10) des ersten Flächenelementes (1);
(II) Bördeln des Flansches (10) des ersten Flächenelementes (1) um den Flansch (20) des zweiten Flächenelementes (2).
Erfindungsgemäß wird im Schritt (I) dieser Ausführungsvariante die Klebemasse (30) derart auf der ersten, in der Falzverbindung innen liegenden Fläche (11) des Flansches (10) des ersten Flächenelementes (1) aufgebracht, dass ein Teil (31) der Klebemasse (30) den Rand (13) des Flansches (10) des ersten Flächenelementes (1) um einen Abstand (a) überragt und somit insbesondere quasi eine freie "Fahne" bildet. Zumindest die dem Flansch (10) des ersten Flächenelements (1) abgewandte Oberfläche (32) des diesen Flansch (10) überragenden Klebemassenteils (31), die im weiteren in Kontakt mit dem Flansch (20) des zweiten Flächenelementes (2) tritt, ist bezüglich des Materials des zweiten Flansches (20) weniger haftklebrig als die übrigen, mit dem Flansch (20) des zweiten Flächenelementes (2) in Kontakt tretende Fläche der Klebmasse (30).

Im Schritt (II) wird der äußere Flansch 10 mit der Klebmassenschicht (30) um den inneren Flansch (20) gebördelt. Der Teil (31) der Klebmassenschicht (30) kommt dabei außerhalb des umgebördelten Flansches (10) zu liegen.

In einer zweiten bevorzugten Ausführungsvariante wird im Schritt (I) die Klebmasse (30) zunächst um das Ende (23) des Flansches (20) geklebt, so dass ein Teil der Klebmasse (30) auf der zweiten Fläche (22) des Flansches (20) des zweiten Flächenelements (2) verklebt ist und ein Teil der Klebmasse auf der ersten Fläche (21) des Flansches (20) des zweiten Flächenelements (2) verklebt ist, derart, dass auf der ersten Fläche (21) des Flansches (20) des zweiten Flächenelements (2) das Teilstück (31) der Klebmasse (30) mit der Länge (a) schwächer anhaftet als die angrenzende Klebmasse oder nicht anhaftet. Bei der anschließenden Bördelung der Flansches (10) des ersten Flächenelements (1) um das Ende 23 des inneren Flansches (20) des zweiten Flächenelements (2) im Schritt (II) kommt das Ende des Flansches (20) des zweiten Flächenelements (2) dann im wesentlichen an die Position auf dem Klebeband (3) zu liegen, an der der Teilbereich (31) des Klebebands mit der einseitig klebkrafterniedrigten Oberfläche (32) beginnt.

Unabhängig von der Ausführungsvariante der Verfahrensführung im Schritt (I) wird das erfindungsgemäße Verfahren im weiteren wie folgt charakterisiert.

Erfindungsgemäß ist die Klebrigkeit der dem Flansch (20) zugewandten Oberfläche (32) des Teil (31) der Klebmassenschicht (30) niedriger ist als die Klebrigkeit der der Oberfläche (32) benachbarten Oberfläche (33) des Klebebands (30), im Rahmen dieser Schrift wird von "erniedrigter Klebrigkeit" gesprochen, wobei dieser Ausdruck den Zustand der Nichtklebrigkeit umfasst und unabhängig davon gebraucht wird, wann und wie die Klebkraft erniedrigt wurde oder ob die geringere Klebkraft in dem betreffenden Oberflächenbereich bereits von Anfang an bestand. Die Klebrigkeit bezieht sich dabei insbesondere auf das Material des Flansches 20, das dessen Oberfläche 21 ausbildet, die mit den betreffenden Klebebandoberflächen bei dem erfindungsgemäßen Herstellverfahren der Falzverbindung in Kontakt tritt.

Insbesondere kann der zweite Flansch (20) nach dem Schritt (I) mit seinem Endabschnitt für die Ausbildung der Flanschverbindung in einem Bereich auf der ersten Seite des ersten Flansches (10) aufliegen, auf dem Klebemasse (30) aufgebracht ist, so dass ein Bereich besteht, in dem die Klebemasse (30) zwischen den beiden Flanschen (10, 20) angeordnet ist.

Nach der Bördelung des Schritt (II) wird in einem Schritt (III) der Klebemassenteil (31) um den Rand (13) des ersten Flansches 10 gelegt und auf der zweiten Fläche (12) des Flansches (10) des ersten Flächenelementes verklebt, so dass nach der Herstellung der Falzverbindung die Klebemasse auf der ersten Fläche (11) mit der Klebemasse auf der zweiten Fläche (12) des Flansches (10) des ersten Flächenelementes am Rand (13) des Flansches (10) eine kontinuierliche Schicht ausbildet, die den Rand (13) des Flansches (10) des ersten Flächenelements bedeckt.

Vorteilhaft wird die Klebmasse in einem Aktivierungsschritt (IV) gehärtet, um einerseits die schlussendlichen Klebkräfte der Verklebung der Flansche miteinander zu bewirken und andererseits die Abdichtung und Versiegelung zu optimieren; insbesondere dauerhaft und/oder robust auszubilden. Die Aktivierung der Klebmasse für die Aushärtung kann bevorzugt thermisch erfolgen.

Die Bezeichnung der Verfahrensschritte mit (I) bis (V) dient zur sprachlichen Charakterisierung, bedeutet aber nicht, dass die Schritte zwingend unmittelbar aufeinander folgen müssen. Gegebenenfalls kann das erfindungsgemäße Verfahren also auch noch Zwischenschritte umfassen.

Als Flansch wird der in der Regel am Rand liegende Teil eines Flächengebildes bezeichnet, der als innerer oder äußerer Teil Bestandteil der Falzverbindung wird. Ein Flansch weist jeweils eine erste und eine zweite Oberfläche auf. Der in der Falzverbindung außen zu liegen kommende Flansch wird im Folgenden als äußerer Flansch bezeichnet, der innen zu liegen kommende als innerer Flansch.
Als Falz- oder Bördelrand wird der Teil der Falzverbindung definiert, der durch den Umschlag des äußeren Flansches um den inneren Flansch gebildet wird.

Als Flächengebilde werden im Sinne der vorliegenden Schrift alle flächig ausgebildeten Körper verstanden. Flächengebilde im Sinne der vorliegenden Schrift können einstückig sein - beispielsweise durch ein einzelnes Blech gebildet - oder auch aus mehreren flächigen, zumindest im Bereich des späteren Falzes eine gemeinsame Fläche bildenden, Teilgebilden bestehen - beispielweise zwei flächig zumindest im Bereich der späteren Falzverbindung aufeinander liegenden Blechen -. Sofern eines oder beider der Flächengebilde mehrstückig ausgebildet sind, können die Einzelstücke - etwa zwei Bleche - bereits miteinander verbunden sein, bevor die Falzverbindung hergestellt wird, beispielsweise durch Verkleben, Vernieten, Verschweißen, Verlöten oder dergleichen. Die schlussendliche, dauerhafte Fixierung zu einem einzigen Flächenelement kann aber auch erst durch die Falzverbindung bewirkt werden. In dem Bereich, der schließlich außerhalb der Falzverbindung liegt, können die Flächengebilde von der flächigen Form abweichen beziehungsweise bei mehrstückigen Flächengebilden im weiteren Formverlauf voneinander abweichen.

Bevorzugt wird die Klebmassenschicht (30) in Form eines Klebstreifens, auch als Klebeband bezeichnet, aufgebracht. Ein Klebstreifen im Sinne der vorliegenden Schicht ist dadurch gekennzeichnet, dass er insoweit eine Eigenstabilität mitbringt, dass er - zumindest für eine hinreichende Dauer nach seiner Herstellung, um appliziert zu werden und die Klebeverbindung zu bewirken; insbesondere dauerhaft - selbsttragend ist, also auch ohne das schlussendliche Substrat, auf dem er verklebt ist, seine Form beibehält und nicht beispielsweise signifikant zerfließt. Erfindungsgemäße Klebestreifen können beispielweise einschichtig, zweischichtig, dreischichtig oder mehrschichtig sein.

Vorzugsweise ist die Klebemasse eine aktivierbare Klebemasse, wobei die Klebemasse insbesondere in einem weiteren Schritt (IV) nach dem erfolgten Bördeln in Schritt (II) und dem Umlegen um den Rand des äußeren Flansches in Schritt (III) zum Herstellen der Falzverbindung aktiviert wird. Durch das Aktivieren wird die Klebemasse ausgehärtet. Während des Aktivierungsprozesses wird die Klebemasse vorzugsweise zunächst fließfähig. Sie fließt auf die Flansche auf, so dass eine hochwertige Verklebung und Abdichtung hergestellt wird. reaktive Klebmassen, die durch Aktivierung gehärtet werden ("sogenannte Strukturkleber") weisen regelmäßig Klebkräfte auf, die um Größenordnungen höher sind als diejenigen reiner Haftklebemassen.

Insbesondere ist die Klebemasse zudem auch eine Haftklebemasse im ungehärteten Zustand, also vor dem Aktivierungsschritt (IV). Haftklebemassen (PSA; englisch: "pressure sensitive adhesives") sind insbesondere solche polymeren Massen, die - gegebenenfalls durch geeignete Additivierung mit weiteren Komponenten, wie beispielsweise Klebharzen - bei der Anwendungstemperatur (sofern nicht anders definiert, bei Raumtemperatur) dauerhaft klebrig und permanent klebfähig sind und an einer Vielzahl von Oberflächen bei Kontakt anhaften, insbesondere sofort anhaften (einen sogenannten "Tack" [Klebrigkeit oder Anfassklebrigkeit] aufweisen). Sie sind in der Lage, bereits bei der Anwendungstemperatur ohne eine Aktivierung durch Lösemittel oder durch Wärme - üblicherweise aber durch den Einfluss eines mehr oder weniger hohen Druckes - ein zu verklebenden Substrat hinreichend zu benetzen, damit sich zwischen der Masse und dem Substrat für die Haftung hinreichende Wechselwirkungen ausbilden können. Hierfür wesentliche Einflussparameter sind unter anderem der Druck sowie die Kontaktzeit. Die besonderen Eigenschaften der Haftklebemassen gehen unter anderem insbesondere auf deren viskoelastische Eigenschaften zurück.
Haftklebemassen können grundsätzlich auf Grundlage von Polymeren unterschiedlicher chemischer Natur hergestellt werden. Die haftklebenden Eigenschaften werden unter anderem durch die Art und die Mengenverhältnisse der eingesetzten Monomere bei der Polymerisation der der Haftklebemasse zugrunde liegenden Polymere, deren mittlere Molmasse und Molmassenverteilung sowie durch Art und Menge der Zusatzstoffe der Haftklebemasse, wie Klebharze, Weichmacher und dergleichen, beeinflusst. Für die Höhe der Verklebungsfestigkeit von Haftklebemassen auf einem Untergrund ist neben der Natur der Haftklebemasse auch die Natur des Untergrundes relevant. Es können Haftklebemassen mit nur geringer Haftung bis hin zu Haftklebemassen mit hochfester Haftung auf einem jeweils definierten Untergrund realisiert werden.
Zur Erzielung der viskoelastischen Eigenschaften werden die Monomere, auf denen die der Haftklebemasse zugrunde liegenden Polymere basieren, sowie die gegebenenfalls vorhandenen weiteren Komponenten der Haftklebemasse insbesondere derart gewählt, dass die Haftklebemasse eine Glasübergangstemperatur (nach DIN 53765) unterhalb der Anwendungstemperatur (also üblicherweise unterhalb der Raumtemperatur) aufweisen. Durch geeignete kohäsionssteigernde Maßnahmen, wie beispielsweise Vernetzungreaktionen (Ausbildung brückenbildender Verknüpfungen zwischen den Makromolekülen), kann der Temperaturbereich, in dem eine Polymermasse haftklebrige Eigenschaften aufweist, vergrößert und/oder verschoben werden. Der Anwendungsbereich der Haftklebemassen kann somit durch eine Einstellung zwischen Fließfähigkeit und Kohäsion der Masse optimiert werden.

Sind Klebebänder mit zwei sich unterscheidenden äußeren Klebmassenschichten im Einsatz (insbesondere bei mehrschichtigen Klebestreifen), so genügt bevorzugt zumindest eine, sehr bevorzugt genügen beide Klebmassenschichten der vorstehenden Charakterisierung, eine aktivierbare Klebemasse, insbesondere auch eine Haftklebemasse zu sein.

Zumindest auf dem Bereich 32 der Oberfläche des überstehenden Teils 31 der Klebmassenschicht 30, der im erfindungsgemäßen Verfahren mit der Oberfläche 21 des zweiten Flansches 20 in Kontakt kommt und um den Rand (13) des äußeren Flansches (20) gelegt wird, ist die Haftklebrigkeit geringer als im übrigen Bereich der Oberfläche der Klebmasse 30; insbesondere geringer als im benachbarten Bereich 33 der Oberfläche der Klebmassenschicht 30. In einer bevorzugten Vorgehensweise ist die Klebmasseschicht auf der oberen Oberfläche 32 im überstehenden Klebmassenschicht-Teils 31 nicht haftklebrig. Im Rahmen dieser Schrift wird in diesem Zusammenhang von einer "erniedrigten" Klebrigkeit gesprochen, unabhängig davon, wie die erniedrigte Klebrigkeit in dem betreffenden Bereich bewirkt wird und ob sie bereits initial vorlag oder ob sie, ausgehend von der Klebrigkeit im übrigen Oberflächenbereich der Klebmassenschicht, nachträglich bewirkt wurde. Auf diese Weise besitzt die Klebmassenschicht eine Fläche, die nach dem Bördeln um den zweiten Flansch 20 nicht auf diesem verklebt beziehungsweise leicht wieder von diesem gelöst werden kann, um ihrerseits um das Ende 13 des ersten Flansches gelegt zu werden (vgl. auch Fig. 1 (4)). Insbesondere kann in diesem Oberflächenbereich 32 des Teils 31 der Klebmassenschicht 30 deren ursprüngliche Haftklebrigkeit herabgesetzt worden sein. Die Herabsetzung der Klebrigkeit kann derart realisiert sein, dass die initiale Klebrigkeit im betreffenden Oberflächenbereich verringert ist, wobei noch eine Restklebrigkeit besteht, aber auch derart, dass der entsprechende Oberflächenbereich keine Klebrigkeit mehr aufweist (die Klebmassenschicht dort also nichtklebrig ist). Eine dortige noch verbleibende geringe Klebrigkeit hat den Vorteil, dass die Klebmassenschicht während des Verfahrens leicht auf dem ersten Flansch fixiert und in Position gehalten werden kann, für die weiteren Verfahrensschritte aber leicht wieder von dem Flansch abzulösen ist und vorteilhaft dort keine Rückstände hinterlässt.

Die Herabsetzung der Klebrigkeit kann beispielweise durch chemische oder physikalische Deaktivierung der Klebmassenoberfläche in dem betreffenden Bereich geschehen, etwa durch Vergiftung, Bedeckung, Bestrahlung oder dergleichen. Eine Abdeckung kann entweder permanent (durch Pulverbedeckung, permanente Folienbedeckung und so weiter) geschehen oder temporär, etwa durch Verwendung einer antiadhäsiv ausgerüsteten Abdeckfolie (sogenannter Liner), die nach Erreichen des umgebogenen Zustandes der Klebeschicht 30 (wie in Fig. 1 (4) dargestellt) wieder entfernt werden kann, so dass die ursprüngliche Klebrigkeit der Klebmassenschicht wieder hergestellt ist. Die Erniedrigung der Klebkraft kann beispielsweise auch dadurch bewirkt werden, dass im betreffenden Bereich eine dünne Schicht einer zweiten Haftklebemasse mit initial niedriger Klebkraft auf die Oberfläche der Klebmassenoberfläche, die zur Falzverklebung genutzt wird, aufgebracht ist. Die Erniedrigung kann auch derart durchgeführt werden, dass die Klebkraft der betreffende Teilfläche 32 nicht vollflächig, sondern nur lokal - etwa einer Vielzahl einzelner Stellen, etwa punktförmig, streifenförmig oder dergleichen - erniedrigt ist, so dass insgesamt eine Klebkrafterniedrigung auf der gesamten Teilfläche 32 vorliegt.

Auf der den Oberflächen 32 und 33 gegenüberliegenden Seite des Klebebandes, umfassend die Oberfläche 34 und ggf. anschließende Bereiche, ist die Klebrigkeit bevorzugt hoch, so dass eine relativ feste Fixierung auf der ersten Oberfläche 11 des Flansches 10 und nach Umschlagen des Klebebandes um den Rand des Flansches 10 auch auf der zweiten Oberfläche des Flansches 10 erfolgt.

Wie vorstehend dargelegt sind sowohl einschichtige Klebestreifen als auch mehrschichtige Klebestreifen erfindungsgemäß vorteilhaft. Das Trägermaterial - insbesondere für mehrschichtige Klebebänder - umfasst alle flächigen Gebilde, beispielsweise in zwei Dimensionen ausgedehnte Folien oder Folienabschnitte, Bänder mit ausgedehnter Länge und begrenzter Breite, Bandabschnitte, Stanzlinge, Mehrschichtanordnungen und dergleichen. Dabei sind für verschiedene Anwendungen unterschiedlichste Träger wie zum Beispiel Folien, Gewebe, Vliese und Papiere mit verschiedenen Klebstoffen kombinierbar.

Wie vorstehend ausgeführt, können erfindungsgemäße Klebestreifen beispielweise einschichtig - gebildet aus einer einzigen Klebmassenschicht -, zweischichtig - gebildet aus zwei - insbesondere, aber nicht zwingend unterschiedlichen - flächig zusammengefügten Klebmassenschichten -, dreischichtig - zwei identische oder zwei unterschiedliche Klebmassenschichten mit einer dazwischen angeordneten Schicht, etwa einer (permanenten) Trägerschicht - oder mehrschichtig - zwei außenliegende identische oder unetrschiedliche Klebmassenschichten mit zwei oder mehr dazwischen angeordneten Zwischenschichten - sein.

Einschichtige Klebmassenschichten weisen insbesondere eine für die Eigenstabilität hinreichende Kohäsion auf und sind erfindungsgemäß bevorzugt einsetzbar. Klebebänder aus zwei zusammengefügten Klebmasseschichten bieten den Vorteil, dass sie hinsichtlich der verwendeten Klebmassen auf unterschiedliche Materialien der die Flansche bildenden Flächengebilde angepasst sein können. Vorteilhaft ist zumindest eine der Klebmassenschichten so stabil, dass der gesamte Klebestreifen für die Anwendung hinreichend eigenstabil ist. Ebenfalls vorteilhaft einzusetzende oder beispielsweise doppelseitige Systeme aus zwei gleichen oder unterschiedlichen Klebmassenschichten mit dazwischen flächig angeordnetem, permanent im Klebeband verbleibenden Trägermaterial (Dreischichtaufbauten) können ebenfalls in den eingesetzten Klebmassen auf die verwendeten Materialien der Flächengebilde angepasst sein, und/oder durch Verwendung einer innenliegenden Schicht eines permanenten Trägermaterials kann eine Eigenstabilität in das Klebeband erst eingebracht (etwa bei sehr weichen Klebmassen) oder auch verstärkt werden. Trägerschichten können zudem weitere Funktionen - wie Barrierefunktionen, Sperrfunktionen, Absorptionsfunktionen, Flexibilität, Anpassung der Dehnbarkeit des Klebestreifen und so weiter - mitbringen. Mehr als dreischichtige Klebestreifen (Mehrschichtaufbauten) können weitere Zwischenschichten umfassen, so dass etwa funktionelle Schichten (etwa mit Funktionen wie vorstehend dargelegt) neben einer oder mehreren Trägerschichten vorliegen. Insbesondere bevorzugt sind einschichtige Klebestreifen.

Als (permanentes) Trägermaterial eines Klebebandes werden bevorzugt Polymerfolien, Folienverbunde oder mit organischen und/oder anorganischen Schichten versehene Folien oder Folienverbunde eingesetzt. Derartige Folien/Folienverbunde können aus allen gängigen zur Folienherstellung verwendeten Kunststoffen bestehen, beispielhaft aber nicht einschränkend erwähnt seien: Polyethylen, Polypropylen - insbesondere das durch mono- oder biaxiale Streckung erzeugte orientierte Polypropylen (OPP), Cyclische Olefin Copolymere (COC), Polyvinylchlorid (PVC), Polyester - insbesondere Polyethylenterephthalat (PET) und Poylethylennaphtalat (PEN), Ethylenvinylalkohol (EVOH), Polyvinylidenchlorid (PVDC), Polyvinylidenfluorid (PVDF), Polyacrylnitril (PAN), Polycarbonat (PC), Polyamid (PA), Polyethersulfon (PES) oder Polyimid (PI).

Vorzugsweise weist das Trägermaterial eine Erweichungstemperatur auf, die unterhalb der Aktivierungstemperatur der Klebemasse liegt. In diesem Fall erweicht das Trägermaterial bei Aktivierung der Klebemasse, kann fließen und so Spannungen durch Schrumpf oder Expansion ausgleichen.

Eine oder beide Oberflächen der eingesetzten Klebmassenschichten - insbesondere Haftklebmassenschichten - können vorteilhaft temporär mit einem Abdeckmaterial - sogenannte Liner - abgedeckt sein, um eine leichte Lagerung, Applikation und/oder anderweitige Handhabung zu gewährleisten. Liner dienen insbesondere auch dazu, zwischenzeitlich freiliegende Klebmassenoberflächen zu schützen beziehungsweise ein ungewolltes Verkleben dieser Flächen zu vermeiden.

Haftklebebänder, die ein- oder beidseitig mit Klebstoffen beschichtet sind, werden am Ende des Herstellungsprozesses zumeist zu einer Rolle in Form einer archimedischen Spirale aufgewickelt oder kreuzgespult. Auch um bei doppelseitig klebenden Klebebändern zu verhindern, dass die Klebemassen miteinander in Kontakt kommen, oder um bei einseitig klebenden Klebebändern eine Verklebung der Klebemasse auf dem Träger zu verhindern, werden die Klebebänder vor dem Wickeln üblicherweise mit einem Abdeckmaterial (auch als Trennmaterial bezeichnet) eingedeckt, das zusammen mit dem Klebeband aufgewickelt wird. Dem Fachmann sind derartige Abdeckmaterialien unter den Namen Liner oder Releaseliner bekannt. Neben der Abdeckung von ein- oder doppelseitig klebenden Klebebändern werden Liner auch zur Eindeckung von reinen Klebemassen (einschichtigen Klebestreifen; auch als Transferklebeband bezeichnet) und Klebebandabschnitten (zum Beispiel Etiketten) eingesetzt. Diese Liner sorgen des Weiteren dafür, dass die Klebemasse vor der Anwendung nicht verschmutzt wird.

Ein Liner ist nicht Bestandteil eines Klebebandes, sondern nur ein Hilfsmittel zu dessen Herstellung, Lagerung oder für die Weiterverarbeitung. Ebenso ist der Verbund nur temporär und nicht dauerhaft.

Ein Liner nach dem Stand der Technik besteht aus zumindest einer abhäsiven Schicht (Trennschicht), um die Adhäsionsneigung von adhärierenden Produkten gegenüber diesen Oberflächen zu verringern (trennwirksame Funktion). Diese Schicht kann auf einem Trägermaterial aufgebracht sein.

Als Trennschicht eingesetzt werden können alle dem Fachmann bekannten Systeme, insbesondere solche, welche im "Handbook of Pressure Sensitive Adhesive Technology" von Donatas Satas (Satas & Associates, Warwick 1999) genannt sind. Das Material der abhäsiven Trennschicht ist nach dem Stand der Technik bevorzugt ausgewählt aus der Gruppe umfassend Silikone, fluorierte Silikone, Silikon-Copolymere, Wachse, Carbamate, Fluorpolymere und Polyolefine oder Mischungen aus zwei oder mehr der genannten Stoffe.

Als Trägermaterial des Liners können insbesondere Papiere oder Folien eingesetzt werden. Als Folien werden dabei bevorzugt solche aus biaxial verstrecktem Polyethylenterephthalat, Polybuten, Polypropylen, Polyethylen, monoaxial verstrecktem Polypropylen, biaxial verstrecktem Polypropylen oder Polyethylen verwendet, besonders vorzugsweise Polyolefinfolien (Polypropylen- und Polyethylenfolien) oder Polyesterfolien. Auch polymerbeschichtete Papiere oder Vliese sind anzutreffen.

Dieser Liner wird zumindest von dem auf der ersten Oberfläche des äußeren Flansches befindlichen Klebeband bzw. Teil des Klebebands entfernt, bevor das Bördeln ausgeführt wird. Bevorzugt wird der Liner nur auf dem auf der ersten Oberfläche des äußeren Flansches befindlichen Klebeband bzw. Teil des Klebebands entfernt, damit beim Bördeln keine Haftung zum Bördelwerkzeug auftritt. Dies wird in der Ausführung als herumgeklebtes einziges Klebeband durch einen in Längsrichtung des Klebebands zweiteiligen oder perforierten Liner erleichtert, von dem dann nur ein Teil vor dem Bördeln entfernt wird.

In einer Variante des erfindungsgemäßen Verfahrens ist die dem äußeren Flansch 10 abgewandte Seite der Klebmassenschicht [vgl. Figuren 1 (1), 2 (1), dort obenliegende Fläche des Klebebandes 30] zunächst mit einem perforierten oder geschlitzten Liner abgedeckt, wobei die Perforation beziehungsweise der Schliz insbesondere am Übergang des Flächenbereichs 32 zum Flächenbereich 33 verläuft. Vor dem Aufbringe des Flansches 20 und dem Bördeln des Flansches 10 und den Flansch 20 wird der Teil des Liners, der nicht auf der Teilfläche 32 liegt, entfernt, während die Teilfläche 32 abgedeckt bleibt und so in ihrer Klebrigkeit erniedrigt ist (bzw. nach außen nichtklebrig vorliegt). Nach dem Umlegen der Klebmassenschicht 30 um den Rand 13 des äußeren Flansches 10 im Schritt (III), aber vor der Härtung in Schritt (IV) kann dann optional, wenn dies gewünscht ist, auch der Liner von der Teilfläche 32 abgezogen werden, dies ist aber im erfinderischen Sinne nicht zwingend erforderlich. So kann der Liner in diesem Bereich, insbesondere wenn er beispielweise bei der Aushärtung dauerhaft mit dem entsprechenden Teil 31 der Klebmassenschicht 30 dauerhaft "verbackt", als (dauerhafte) Schicht auf der ausgehärteten Klebmassenschicht dienen, die zusätzlichen - etwa mechanischen oder chemischen - Schutz bietet oder zu einer guten optische Erscheinung der Versiegelungsstelle beiträgt.

Offenbart wird somit die Verwendung eines Klebebands mit einem mehrteiligen oder perforierten Liner bei der Herstellung einer Falzverklebung und-versiegelung.

In einer weiteren bevorzugten Ausführung ist das Klebeband ein aus zwei parallel zueinander angeordneten Klebemassestreifen aus verschiedenen Klebemassen bestehendes Klebeband. Diese Streifen sind auf einem einzigen Liner so dicht nebeneinander angeordnet, dass sie miteinander verbunden sind oder im Lauf des Verfahrens eine Verbindung zustande kommt. Bevorzugt weist die auf der zweiten Oberfläche des äußeren Flansches befindliche zweite Klebemasse nach einem optionalen Aktivierungsschritt einen geringeren Elastizitätsmodul auf als die auf der ersten Oberfläche befindliche erste Klebemasse. Dies verhindert das Auftreten von Rissen in der Oberfläche der zweiten Klebemasse durch zum Beispiel thermische Ausdehnungs- bzw. Schrumpfungsprozesse während weiterer Verfahrensschritte, denen die Flanschverbindung ausgesetzt ist, und führt so zu einem optisch besseren Erscheinungsbild.

In einer weiter bevorzugten Ausführung ist das um die Kante des Flansches herumgeklebte Klebeband ein partiell einseitiges Klebeband. Dabei ist das Trägermaterial in Längsrichtung nur auf dem Teil der Breite des Klebebands aufgebracht, der auf der zweiten Seite des äußeren Flansches zu liegen kommt. Somit ist der auf der sichtbaren Seite der Falzverbindung zu liegen kommende Teil des Klebebands mit einem Trägermaterial abgedeckt und damit optisch ansprechender sowie vor Umgebungseinfüssen besser geschützt. Dabei kann das Trägermaterial mit um die Kante des Flansches herumgeführt sein oder die Kante kann frei von Trägermaterial sein. Bevorzugt ist ersteres, da hierbei die Kante mechanisch besser geschützt ist.

Offenbart wird somit auch ein Klebeband sowie seine Verwendung bei der Herstellung einer Falzverklebung, welches in Längsrichtung nur zu einem Teil seiner Breite mit einem Trägermaterial oder einem Linermaterial versehen ist. Offenbart wird also ein partiell doppelseitiges Klebeband zur Herstellung einer versiegelten Falzverbindung, bestehend aus einem Trägermaterial und einem Linermaterial, einem ersten Klebemassestreifen einer ersten Klebemasse, einem zweiten Klebemassestreifen einer zweiten Klebemasse, wobei die zweite Klebemasse von der ersten verschieden sein kann, die beiden Klebemassenstreifen in Längsrichtung nebeneinander angeordnet sind und der Liner zumindest einen der beiden Klebemassenstreifen bedeckt, wobei das Trägermaterial nur den zweiten Klebemassestreifen abdeckt und der Liner zumindest den ersten Klebemassestreifen abdeckt.

Bevorzugt ist die Klebemasse eine aktivierbare Haftklebemasse, insbesondere eine thermisch aktivierbare Haftklebemasse. Bevorzugt ist das Träger- oder Linermaterial ein thermoplastisches Polymer, dessen Erweichungstemperatur unterhalb der Aktivierungstemperatur der Klebemasse liegt. Dies hat den Vorteil, dass das Material bei der Aktivierung der Klebemasse fließt und somit Spannungen durch Schrumpf oder Expansion ausgleichen kann.

Weiterhin ist es bevorzugt, dass die Klebemasse des zweiten Klebemassestreifens, der vom Trägermaterial abgedeckt wird, nach Aktivierung einen geringeren Elastizitätsmodul aufweist als die Klebemasse des ersten Klebemassestreifens.

Als Klebemasse können Haftklebemassen, Heißschmelzklebemassen oder aktivierbare Klebemassen verwendet werden.

Ganz besonders bevorzugt wird eine aktivierbare Haftklebemasse. Diese hat den Vorteil, dass bereits vor der Aktivierung ein klebender Verbund der Flächengebilde hergestellt wird. Durch die Aktivierung wird die Festigkeit der Klebverbindung dann gesteigert.

Als aktivierbare Haftklebemassen kommen dabei alle bekannten aktivierbaren Haftklebemassen in Frage. Zusammensetzungen und Herstellung solcher aktivierbaren Haftklebemassen sind dem Fachmann bekannt und geläufig.

Besonders geeignet sind solche aktivierbaren Haftklebemassen, die aus Verbindungen hergestellt sind, die zumindest eine der folgenden funktionellen Gruppen aufweisen: Epoxide, Amine, Ureidogruppen, Hydroxygruppen, Ethergruppen, Säuregruppen, insbesondere Carbonsäuregruppen, vorzugsweise Acrylsäure- und Methacrylsäuregruppen, und Carbonsäureanhydridgruppen, Estergruppen und Amidgruppen, Isocyanate, Imidazole, phenolische Gruppen, Harnstoffgruppen, Silangruppen, ethylenische Doppelbindungen, vor allem in Verbindung mit Initiatorgruppen, die eine radikalische Polymerisation initiieren können, oder mit schwefelhaltigen Vulkanisiermitteln.

Die aktivierbaren Haftklebemassen können wahlweise ein oder mehrere weitere Rezeptierungsbestandteile wie zum Beispiel Härter, Reaktionsbeschleuniger, Katalysatoren, Initiatoren, Füllstoffe, Mikrokugeln, Tackifier-Harze, nicht reaktive Harze, Weichmacher, Bindemittel, Bitumen, Alterungsschutzmittel (Antioxidantien), Lichtschutzmittel, UV-Absorber, rheologische Additive, sowie sonstige Hilfs- und Zusatzstoffe enthalten sein.

Beispiele für geeignete Klebemassen für die vorliegende Erfindung finden sich in der EP 1 334 161 B1, der EP 0 877 069 B1, der EP 0 842 995 B1, der US 6,294,270 B1, der US 2010/0137530 A1, der US 2012/0111488 A1, der WO 1996/021704 A2, der WO 2011/112643 A2 oder der WO2013/101693 A1, wobei diese Aufzählung rein beispielhaft und in keiner Weise abschließend ist.

In einer besonders bevorzugten Ausführung ist die aktivierbare Klebemasse expandierbar. Expandierbar bedeutet dabei, dass das Volumen der Klebemasse nach der Expansion oberhalb dessen der Klebemasse vor der Expansion liegt, gemessen jeweils bei gleicher Temperatur (in der Regel Raumtemperatur, 15 bis 30 °C). Bevorzugt liegt die Volumenzunahme bei mehr als 5 %. Die Expansion kann chemisch oder physikalisch erfolgen. Bevorzugt umfasst die Klebemasse ein thermisch aktivierbares Schäumungsmittel.

Dabei weist die aktivierbare mit Schäumungsmittel gefüllte Klebemasse nach dem Schäumen vorzugsweise ein Raumgewicht von kleiner 900 kg/m³, insbesondere von kleiner 700 kg/m³ auf.

Gemäß einer vorteilhaften Ausführungsform handelt es sich bei dem Schäumungsmittel um Mikrokugeln, die aus einer Polymermembran bestehen, die ein Treibmittel umschließt, so genannte Mikroballons Der Anteil dieser Mikroballons in der Klebemasse liegt weiter vorzugsweise zwischen 0,5 und 20 Gew.-%, weiter bevorzugt zwischen 2 und 12 Gew.-%. Bei Mikroballons handelt es sich um elastische Hohlkugeln, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind. Durch ein Einwirken auf die Mikroballons, insbesondere durch eine Wärmeeinwirkung erweicht einerseits die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Die Expansion der Klebemasse erfolgt vorzugsweise parallel zur Aktivierung in Schritt (IV). In einer anderen bevorzugten Ausführungsform erfolgt die Expansion im Anschluss an die Aktivierung in einem weiteren Schritt (V).

Durch die Verwendung einer expandierbaren Klebemasse wird auch erreicht, dass der bei der einen Variante der Flanschbildung entstehende nicht mit Klebemasse gefüllte Hohlraum mit Klebemasse gefüllt wird.

Das erfindungsgemäße Verfahren lässt sich insbesondere vorteilhaft in der Automobilindustrie anwenden, hier insbesondere zur Falzherstellung und -versiegelung bei der Herstellung von Fahrzeugkarosserien. Die Flächenelemente können beispielweise beide aus Metall, beide aus oberflächenbehandeltem Metall, beide aus galvanisiertem Metall, beide aus Kunststoff, beide aus lackierten Metallen oder lackierten Kunststoffen oder dergleichen bestehen. Das Metall der beiden Flächenlemente kann auch unterschiedlich sein, wobei das jeweilige Material beispielweise wieder aus der vorstehenden Auflistung stammen kann. Dabei werden insbesondere Falzverbindungen zweiter Metalllbleche hergestellt, aber grundsätzlich ist das erfindungsgemäße Verfahren auch für alle anderen Materialien, wie insbesondere Kunststoffe, einsetzbar, ebenso wie für die Falzherstellung eines Metalls und eines Kunststoffs. Falzverbindungen im Karosseriebau, für die das erfindungsgemäße Verfahren hervorragend geeignet ist, kommen etwa vor an Türen, an Kofferraumdeckeln, an Motorhauben, am Dachansatz und dergleichen.

Ein Schutzeffekt der Versiegelung resultiert insbesondere daraus, dass der Klebstoff im Verlaufe des Versiegelungsprozesses erweicht, gegebenenfalls sogar schmelzfließfähig wird, und sich dabei auch an eventuelle Unregelmäßigkeiten der Flächenelemente anschmiegt und dieses benetzt. Dabei können Löcher, Hohlstellen, Nähte und dergleichen aufgefüllt werden und Lufteinschlüsse und Blasen durch den sich anschmiegenden Klebstoff von der Unregelmäßigkeit fortgedrückt werden, insbesondere für während des Versiegelungsprozesses schmelzfließfähige Klebstoffe. Der Schutzeffekt kann dadurch verstärkt werden, dass die eingesetzte Klebmasse eine Barrierewirkung für Permeaten besitzt. Durch ein Erhärten der Klebmasse erfolgt sowohl die Verbindung der Flächenelemente als auch die Schutzwirkung der Nahtstelle dauerhaft.

Vorteilhaft kann die Versiegelungsstelle im Anschluss an die Härtung der Klebmasse lackiert werden, insbesondere gemeinsam mit der gesamten Karosserie in üblichen Lackierungsverfahren, wie beispielweise per Tauchlackierung.
In anderer Vorgehensweise kann die Versiegelungsstelle auch lokal begrenzt lackiert werden, insbesondere wenn die Karosserie zuvor bereits endlackiert war; und zwar vorteilhaft mit dem Originallack, mit dem auch die Karosserie lackiert wurde, oder einen anderen Lack, etwa einem dem Autolack farblich im wesentlichen entsprechenden Lack, der beispielsweise auf das polymere Material der Folienschicht besonders angepasst sein kann.

In den Figuren 1 bis 3 ist die Erfindung an ausgewählten Beispielen näher veranschaulicht. Die Wahl und Darstellung der Beispiele soll die Erfindung im Ganzen nicht unnötig beschränken. Dabei zeigt:
Fig. 1 eine schematische Darstellung der Schritte der Herstellung einer Falzverbindung gemäß der ersten vorteilhaften erfindungsgemäßen Ausführungsvariante,
Fig. 2 eine schematische Darstellung der Schritte der Herstellung einer Falzverbindung in einer Alternative der ersten vorteilhaften erfindungsgemäßen Ausführungsvariante,
Fig. 3 eine schematische Darstellung der Schritte der Herstellung einer Falzverbindung in einer Alternative der ersten vorteilhaften erfindungsgemäßen Ausführungsvariante
Fig. 4 eine schematische Darstellung einer möglichen zusätzlichen Versiegelungsstelle, wobei die Flansche und die Falzverbindung jeweils im Querschnitt gezeigt sind.

**Fig. 1** zeigt die erste bevorzugte Ausführungsvariante des erfindungsgemäßen Verfahrens. In Fig. 1 (1) dargestellt ist zunächst ein äußerer Flansch 10 eines ersten Flächengebildes 1 mit einer ersten Oberfläche 11 und einer zweiten Oberfläche 12. Auf der ersten Oberfläche 11 des ersten, äußeren Flansches 10 ist eine Klebmassenschicht 30, vorliegend in Form eines einschichtigen Klebebandes, appliziert (Schritt (I) des erfindungsgemäßen Verfahrens). Die Darstellung als einschichtiges Klebeband ist hier beispielhaft, die vorgenannten weiteren Ausführungsformen der Klebebandschicht, wie vorstehend ausgeführt - beispielweise in Form eines doppelseitigen, mehrschichtigen Klebebands -, sind ebenfalls vorteilhaft realisierbar. Die Klebmassenschicht 30 - hier das Klebeband - ist so positioniert, dass es zum Teil - um den Abstand a - über den Rand 13 des Flansches 10 des ersten Flächenelements 1 hinausragt, wobei der überragende Teil den Klebebandteil 31 bildet. Zumindest der Bereich 32 der Oberfläche der Klebmassenschicht 30, der zu dem überragenden Teil 31 gehört und auf der dem Flansch 10 des ersten Flächengebildes 1 abgewandten Seite der Klebmassenschicht 30 liegt, weist eine geringe Klebrigkeit auf als die übrige Fläche der Klebmassenschicht 30. Der Ausdruck "geringere Klebrigkeit" schließt dabei die Nichtklebrigkeit ein. Vorteilhaft schließt der in der Klebrigkeit erniedrigte Oberflächenbereich 32 zur Flanschseite hin auf Höhe dessen Randes 13 ab. Der zweite - innere - Flansch 20 [mit einer ersten Oberfläche 21 und einer zweiten Oberfläche 22] des zweiten Flächengebildes 2 ist noch beabstandet von dem ersten Flansch 10 dargestellt.

Zum Herstellen der Falzverbindung wird der zweite - innere - Flansch 20 des zweiten Flächengebildes 2 über seine zweite Oberfläche 22 mit dem Klebeband 30 auf der ersten Oberfläche 11 des ersten - äußeren - Flansches 10 des ersten Flächengebildes 1 in Kontakt gebracht - vergleiche hierzu Fig. 1 (2). Für die Ausbildung der Flanschverbindung kann dabei der zweite Flansch 20 mit seinem Endabschnitt in einem Bereich auf der ersten Seite des ersten Flansches 10 aufliegen, auf dem Klebemassenschicht 30 aufgebracht ist, so dass ein Bereich besteht, in dem die Klebemasse 30 zwischen den beiden Flanschen 10, 20 angeordnet ist. Der Rand 13 des äußeren Flansches 10 des ersten Flächengebildes 1 und der Rand 23 des inneren Flansches 20 des zweiten Flächengebildes 2 sind dabei um den Abstand A beabstandet.

Anschließend wird der erste - äußere - Flansch 10 des ersten Flächengebildes 1 um den zweiten - inneren - Flansch 20 des zweiten Flächengebildes 2 herumgebördelt (Schritt (II) des erfindungsgemäßen Verfahrens; siehe Pfeil in Fig. 1 (2)), so dass der in der Klebrigkeit erniedrigte Teilbereich 32 sowie auch der daran angrenzende Bereich 33 der Oberfläche der Klebmassenschicht 30 mit der Oberfläche 21 des Flansches 20 in Kontakt kommt - vergleiche hierzu Fig. 1 (3). Der überragende Teil 31 der Klebmassenschicht 30 kommt dabei außerhalb des umgebördelten Flansches 10 zu liegen. In Fig. 1 (3), nach der Bördelung des Schritt (II), liegt somit ein Bauteil vor, bei ein Teil 31 der Klebmasse 30 um einen Abstand a des Flansches 10 des ersten Flächenelementes 1 aus dem Bördelrand herausragt, wobei zumindest im Bereich des Klebemassenteils 31 die an dem Flansch 20 anliegende Oberfläche 32 der Klebmasse 30 weniger klebrig ist als die benachbarte Oberfläche 33 der Klebmasse 30, die innerhalb des Bördelrands liegt.
Die in der Klebrigkeit erniedrigte - nicht bzw. schwach klebende - Oberfläche 32 des Teilbereichs 31 verhindert außerhalb des Endabschnitts des umgebördelten äußeren Flansches 10 eine Anbindung des Klebebands 30 an den inneren Flansch 20 des zweiten Flächenelements 2, beziehungsweise erlaubt nur eine solche Anbindung, die leicht wieder ablösbar ist, während der an den Bereich 32 angrenzende Bereich 33 der Oberfläche der Klebmassenschicht 30 (innerhalb der Umbördelung liegend) fester anhaftet. Durch die Applikation der Klebemasse als Klebeband 30 erfolgt kein Ausquetschen der Klebemasse, wie das bei flüssigen Klebstoffen der Fall wäre. Da die Klebmassenschicht 30 (noch) nicht um den Rand 13 herumgeklebt ist, kommt es dabei nicht zu derartigen Zugspannungen innerhalb der Klebmassenschicht 30, wie sie in einem Verfahren gemäß der DE 10 2016 220 237 A zu beobachten sind und die zu den eingangs beschriebenen Problemen führen. Auch die anderen eingangs beschriebenen Probleme des Verfahrens der DE 10 2016 220 237 A können auf diese Art vermeiden werden.

Zur Versiegelung des Rands 13 wird im weiteren Schritt (III) - vergleiche hierzu Fig. 1. (4) - der einseitig in der Klebrigkeit erniedrigte - nicht bzw. schwach klebende - Teilbereich 31 des Klebebands 30 um den ersten - äußeren - Flansch 10 geschlagen und mit der klebenden - dem in der Klebrigkeit erniedrigten Bereich 32 gegenüberliegenden - Fläche 34 auf die äußere Fläche 12 des umgebördelten Flansch 10 des ersten Flächenelements 1 appliziert. Der Rand 13 des Flansches 10 des ersten Flächenelements 1 wird dabei von dem Klebeband 30 bedeckt. Optional können dann Hilfsmittel, die zur Herabsetzung der Klebrigkeit der Oberfläche 32 im Bereich 31 des Klebebands 30 eingesetzt waren - wie beispielweise aufgelegte Liner - entfernt werden, so dass die nun freiliegende Fläche vor der Aktivierung wieder haftklebrig erscheint, sofern solche Hilfsmittel nicht im Klebeverbund verbleiben sollen (dieser Schritt ist nicht grafisch dargestellt). Durch die Aktivierung kann die freiliegende Klebmassenoberfläche dann beispielweise ihre haftklebrigen Eigenschaften verlieren, etwa so schließlich dass ein glatte (lackartige) Oberfläche vorliegt. Verbleiben die Hilfsmittel alternativ vor der Aktivierung auf der Oberfläche, so können diese beispielweise bei der Aushärtung dauerhaft mit dem entsprechenden Teil 31 der Klebmassenschicht 30 dauerhaft "verbacken" und als (dauerhafte) Schicht auf der ausgehärteten Klebmassenschicht dienen, die zusätzlichen - etwa mechanischen oder chemischen - Schutz bietet oder zu einer guten optische Erscheinung der Versiegelungsstelle beiträgt.

In einem thermischen Aktivierungsschritt (IV) wird dann das Klebeband 30 ausgehärtet, so dass ein Verbund gemäß Figur 1 (5) resultiert. Während des Aktivierungsprozesses wird das Klebeband 30 einschließlich des einseitig in der Klebrigkeit erniedrigten - dort nicht bzw. schwach klebenden - Teilbereichs 31 zunächst fließfähig, so dass das Klebeband 30 einschließlich des einseitig in der Klebrigkeit erniedrigten - nicht bzw. schwach klebenden - Teilbereichs 31 auf die Flansche 10, 20 auffließen und somit eine hochfeste Verklebung und gute Abdichtung hergestellt wird. Der Bereich des Rands 13 des ersten Flansches 10 und der Spalt zwischen dem ersten Flansch 10 und dem zweiten Flansch 20 sind hervorragend abgedichtet (Versiegelungsstelle V).

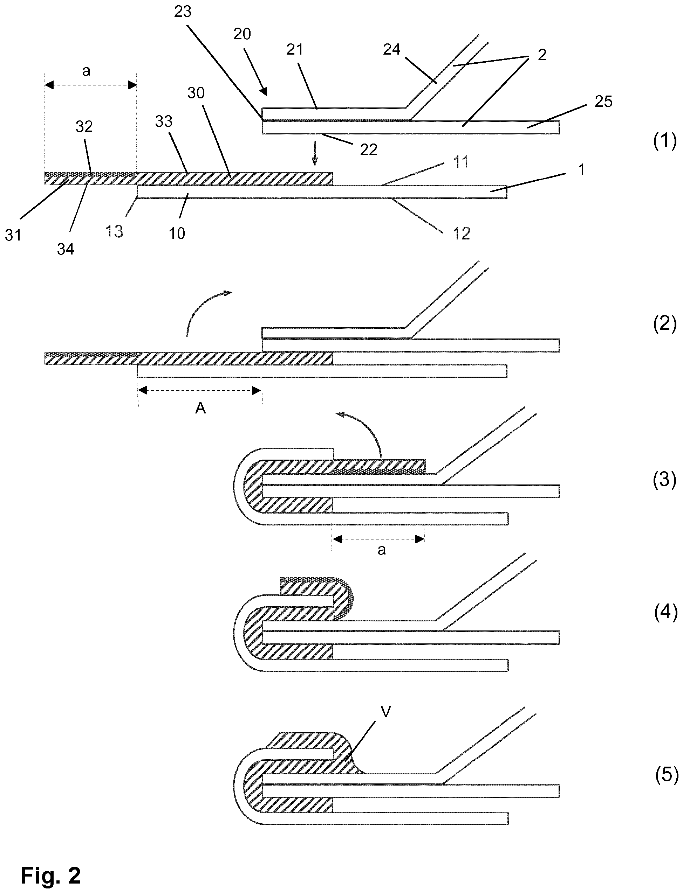

**Fig. 2** zeigt ebenfalls die erste bevorzugte Ausführungsvariante des erfindungsgemäßen Verfahrens, hier im Beispiel der erfindungsgemäßen Herstellung einer Falzverbindung über ein aus zwei Blechen zusammengefügtes zweites Flächenelement 2.
Insbesondere das zweite Flächenelement kann aus zwei aufeinanderliegenden Blechen gebildet sein, die in der Falzverbindung aufeinanderliegen. Dabei können die zwei Bleche des zweiten Flächenelementes bereits vor der Herstellung der Falzverbindung miteinander verbunden sein - etwa miteinander verklebt, vernietet, verlötet oder dergleichen -, oder die zwei Bleche der zweiten Flächenverklebung werden erst durch die Falzverbindung dauerhaft miteinander verbunden.
Fig. 2 (1) zeigt beispielhaft und ohne für die erfinderische Idee beschränkende Absicht ein solches aus zwei Einzelblechen 24, 25 bestehenden Flächenelement 2, das den Flansch 20 bildet. Dort ist beispielhaft dargestellt, dass die Einzelbleche 24, 25 in dem Bereich, der nachher außerhalb der Falzverbindung liegt, im weiteren Formverlauf voneinander abweichen, indem dort das eine, obere Blech 24 in einem Winkel von dem anderen, unteren Blech 25 abgeknickt ist. Dieser weitere Verlauf der Bleche 24, 25 ist jedoch nur beispielhaft dargestellt und soll für die generelle erfinderische Idee nicht beschränkend sein.
Die beiden Bleche 24 und 25 können im zusammenliegenden Bereich einerseits bereits miteinander fixiert sein, andererseits aber auch nur unbefestigt aufliegend positioniert in das Falzverfahren gebracht werden.
Der innere Flansch 20 des zweiten, zweistückigen Flächenelements 2 aus den beiden Blechen 24, 25 wird mit der Oberfläche 22 des unteren Blechs 25 mit der Klebmassenschicht 30 in Kontakt gebracht; wobei die Flansche 10 und 20 in einem Abstand A zueinander angeordnet sind. Danach wird der Flansch 10 des ersten Flächenelements 1 um den inneren Flansch 20 gebördelt (vgl. Fig. 2 (2)) und die Klebmassenschicht 30 mit der Oberfläche 21 des oberen Blechs 24 in Kontakt gebracht. Es entsteht gemäß Fig. 2 (3) ein Bauteil, das dem in Fig. 1 (3) ähnelt, mit dem Unterschied, dass der Flansch 20 zweistückig ausgebildet ist.
Die Verfahrensschritte sind im Verfahren gemäß Fig. 2 im Übrigen identisch zu der Verfahrensführung, wie sie in Fig. 1 gezeigt ist; auf die dortigen Ausführungen und Positionsziffern wird dementsprechend Bezug genommen. Die Bezeichnung der Teilfiguren 1(1) bis 1(5) ist entsprechend durch 2(1) bis 2(5) zu ersetzen. Es entsteht eine Falzverbindung, bei dem der innere Flansch 20 zweistückig vorliegt und die Bleche 24, 25 insbesondere nach der Aushärtung der Klebmassenschicht 30 auch in dieser im Falz liegenden Position aufeinander fixiert sind; beziehungsweise bei der die die Fixierung, sofern vorab schon bestehend, noch verstärkt ist..

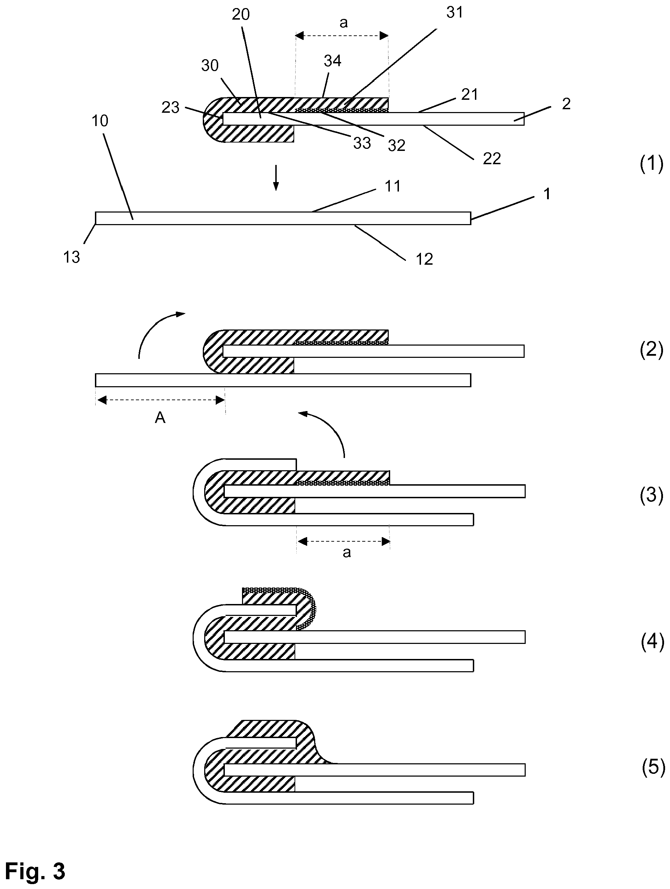

**Fig. 3** zeigt die zweite bevorzugte Ausführungvariante des erfindungsgemäßen Verfahrens. Die Fig. 3 zeigt einen inneren Flansch 20 eines ersten Flächengebildes mit einer ersten Oberfläche 21 und einer zweiten Oberfläche 22, bei dem eine Klebmassenschicht 30 - insbesondere ein Klebeband - um die Kante 23 herum auf beide Oberflächen appliziert ist. Der Rand 23 des inneren Flansch 20 ist also ebenfalls von dem Klebeband 30 bedeckt.

In Fig. 3 (1) ist das Klebeband 30 bereits appliziert auf den inneren Flansch 20 zu sehen. Das Klebeband 30 ist umgeschlagen auf die Oberfläche 22, so dass der Rand 23 bedeckt ist. Die an den Flansch 20 anliegende, nicht bzw. schwach klebende Oberfläche 32 des Teilbereich 31 des Klebebands 30 verhindert partiell die Adhäsion des Klebebands auf der Fläche 21 des Flansches 20. Dementgegen ist die anschließende Oberfläche 33 des Klebebands 30 mit höherer Adhäsion auf der Fläche 21 des Flansches 20 verklebt, und insbesondere ebenso die Oberfläche 34, die auf der Fläche 22 des Flansches 20 anliegt. Für beide Teilflächen 33, 34 sind bereits hohe Adhäsionskräfte zu den Flächen 21 beziehungsweise 22, auf denen sie verklebt sind, vorteilhaft. Der äußere Flansch 10 des zweiten Flächengebildes ist noch beabstandet von dem ersten Flansch 20 dargestellt.

Zum Herstellen der Falzverbindung wird in Schritt (I) der mit dem Klebeband 30 ausgerüstete innere Flansch 20 mittels des Klebebandes 30 mit der ersten Oberfläche 11 des äußeren Flansches 10 in Kontakt gebracht (Fig. 3 (1)), so dass ein Bauteil entsteht, bei dem der Ränder 23 des inneren Flansches 21 des zweiten Flächengebildes und der Rand 13 des äußeren Flansches 10 des ersten Flächengebildes 1 im Abstand A zueinander angeordnet sind (vgl. Fig. 3 (2)); sodann wird in Schritt (II) der äußere Flansch 10 um den inneren Flansch 20 herumgebördelt (vgl. den Pfeil in Fig. 3 (2)) und auf der Klebmasse 30 verklebt, so dass das Zwischenprodukt gemäß Fig. 3 (3) entsteht [das Zwischenprodukt gemäß Fig. 3 (3) entspricht den Zwischenprodukten gemäß Fig. 1 (3) und Fig. 2 (3)].
Durch die Applikation der Klebemasse als Klebeband 30 erfolgt kein Ausquetschen der Klebemasse, wie das bei flüssigen Klebstoffen der Fall wäre. In Fig. 3 (3), nach der Bördelung des Schritt (II), liegt ein Bauteil vor, bei ein Teil 31 der Klebmasse 30 um einen Abstand a aus dem Bördelrand, der durch den umgebogenen Flansch 10 des ersten Flächenelementes 1 gebildet wird, herausragt. Dabei ist zumindest im Bereich des aus dem Bördelrand herausragenden Klebemassenteils 31 die an dem Flansch 20 anliegende Oberfläche 32 der Klebmasse 30 weniger klebrig ist als die benachbarte, Oberfläche 33 der Klebmasse 30, die innerhalb des Bördelrands liegt.

Die nachfolgenden Schritte (III) und folgende werden so durchgeführt, wie bereits für die Fig. 1 detailliert beschrieben wurde; der dortige Bezug auf die Fig. 1 (3) bis 1 (5) ist entsprechend durch den Bezug auf die Figuren 3 (3) bis 3 (5) zu ersetzen. Selbstverständlich sind auch für das in Fig. 3 dargestellte Verfahren alternative Ausführungen der eingesetzten Flächengebilde, etwa beispielsweise doppellagige Flächengebilde 2 aus zwei Blechen wie im Verfahren gemäß Fig. 2, einsetzbar.

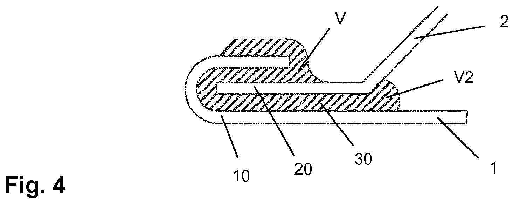

**Fig. 4** zeigt beispielhaft, wie - zusätzlich zu der ersten Versiegelungsstelle V - auch die Spaltstelle zwischen dem inneren Flansch 20 des zweiten Flächenelements 2 und dem äußeren Flansch 10 des ersten Flächenelements 1, die außerhalb der Falzverbindung liegt, vorteilhaft durch die Klebmasse nach Aushärtung abgedichtet und/oder versiegelt sein kann (Versiegelungsstelle V2). Dies ist beispielweise vorteilhaft in einem solchen wie in Fig. 2 beispielhaft dargestellten Fall, bei dem das zweite Flächenelement 2 abknickt und die Spaltstelle dabei eine erhöhte räumliche Öffnung aufweist.

## Patentansprüche

1. Verfahren zur Herstellung einer mittels einer Klebemasse versiegelten Falzverbindung zwischen einem ersten Flächenelement (1), das im Falz außen zu liegen kommt, und einem zweiten Flächenelement (2), das im Falz innen zu liegen kommt, wobei ein Flansch (10) des ersten Flächenelementes (1) über einen Flansch (20) des zweiten Flächenelementes (2) zurückgeschlagen wird und wobei der Flansch (10) des ersten Flächenelements eine erste Fläche (11) und eine zweite Fläche (12) und wobei der Flansch (20) des zweiten Flächenelements (2) eine erste Fläche (21) und eine zweite Fläche (22) aufweist, umfassend die Schritte:
(I) Verkleben des Flansches (20) des zweiten Flächenelements mit zumindest einer Schicht einer Klebemasse (30) auf dem Flansch (10) des ersten Flächenelementes (1), derart, dass das Ende (23) des Flansches (20) des zweiten Flächenelements (2) um einen Abstand (A) gegenüber dem Ende (13) des Flansches (10) des ersten Flächenelements (1) eingerückt ist;
(II) Bördeln des Flansches (10) des ersten Flächenelementes (1) um den Flansch (20) des zweiten Flächenelementes (2),
**dadurch gekennzeichnet, dass**
nach der Bördelung des Schritt (II) ein Teil (31) der Klebmasse (30) um einen Abstand (a) des Flansches (10) des ersten Flächenelementes (1) aus dem Bördelrand herausragt,
wobei zumindest im Bereich des Klebemassenteils (31) die an dem Flansch (20) anliegende Oberfläche (32) der Klebmasse (30) weniger klebrig ist als die benachbarte, Oberfläche (33) der Klebmasse (30), die innerhalb des Bördelrands liegt,
wobei in einem Schritt
(III) nach der Bördelung des Schritt (II) der Klebemassenteil (31) um den Rand (13) des ersten Flansches (10) des ersten Flächenelements (1) gelegt und auf der zweiten Fläche (12) des Flansches (10) des ersten Flächenelementes (1) verklebt wird,
so dass nach der Herstellung der Falzverbindung die Klebemasse auf der ersten Fläche (11) mit der Klebemasse auf der zweiten Fläche (12) des Flansches (10) des ersten Flächenelementes (1) am Rand (13) des Flansches (10) eine kontinuierliche Schicht ausbildet, die den Rand (13) des Flansches (10) des ersten Flächenelements bedeckt.

2. Verfahren nach Anspruch 1, **dadurch gekennzeichnet, dass**
im Schritt (I) die Klebemasse (30) zunächst so auf der ersten, in der Falzverbindung innen liegenden Fläche (11) des Flansches (10) des ersten Flächenelementes (1) aufgebracht wird, dass ein Teil (31) der Klebemasse (30) den Rand (13) des Flansches (10) des ersten Flächenelementes (1) um den Abstand (a) überragt, wobei zumindest im Bereich des Klebemassenteils (31) die dem Flansch (10) abgewandten Oberfläche (32) der Klebmasse (30) weniger klebrig ist als die benachbarte, nicht im Bereich des Klebemassenteils (31) liegende, dem Flansch (10) abgewandte Oberfläche (33) der Klebmasse (30).

3. Verfahren nach Anspruch 1, **dadurch gekennzeichnet, dass**
im Schritt (I) die Klebmasse 30 zunächst um das Ende (23) des Flansches (20) geklebt wird, so dass ein Teil der Klebmasse (30) auf der zweiten Fläche (22) des Flansches (20) des zweiten Flächenelements (2) verklebt ist und ein Teil der Klebmasse auf der ersten Fläche (21) des Flansches (20) des zweiten Flächenelements (2) verklebt ist, derart, dass auf der ersten Fläche (21) des Flansches (20) des zweiten Flächenelements (2) das Teilstück (31) der Klebmasse (30) mit der Länge (a) schwächer anhaftet als die angrenzende Klebmasse oder nicht anhaftet.

4. Verfahren nach einem der vorangehenden Ansprüche, **dadurch gekennzeichnet, dass**
die geringere Klebrigkeit an dem Flansch (20) anliegenden Oberfläche (32) der Klebmasse (30) im Bereich des Klebmassenteils (31) durch chemische oder physikalische Deaktivierung der Klebmassenoberfläche erfolgt, insbesondere durch Vergiftung, Bedeckung oder Bestrahlung.

5. Verfahren nach einem der vorangehenden Ansprüche, **dadurch gekennzeichnet, dass**
die an dem Flansch (20) anliegenden Oberfläche (32) der Klebmasse (30) im Bereich des Klebmassenteils (31) im Wesentlichen nichtklebrig ist.

6. Verfahren nach Anspruch 1, **dadurch gekennzeichnet, dass** die Klebemasse eine aktivierbare Klebemasse ist und die Klebemasse zum Herstellen der Falzverbindung in einem weiteren Schritt (IV) aktiviert wird.

7. Verfahren nach mindestens einem der Ansprüche 1 bis 4, **dadurch gekennzeichnet, dass** die Klebemasse als Klebeband appliziert wird.

8. Verfahren nach Anspruch 7, **dadurch gekennzeichnet, dass** das Klebeband einschichtig ist.

9. Verfahren nach Anspruch 7, **dadurch gekennzeichnet, dass** das Klebeband zumindest teilweise mit einem Trägermaterial versehen ist.

10. Verfahren nach Anspruch 9, **dadurch gekennzeichnet, dass** das Trägermaterial eine Erweichungstemperatur aufweist, die unterhalb der Aktivierungstemperatur der Klebemasse liegt.

11. Verfahren nach mindestens einem der vorangehenden Ansprüche, **dadurch gekennzeichnet, dass** die Klebemasse (30) eine Haftklebemasse, eine Heißschmelzklebemasse, eine aktivierbare Klebemasse oder eine aktivierbare Haftklebemasse ist.

12. Verfahren nach mindestens einem der vorangehenden Ansprüche, **dadurch gekennzeichnet, dass** die Klebemasse (30) eine expandierbare Klebemasse ist.

13. Verfahren nach Anspruch 12, **dadurch gekennzeichnet, dass** die Expansion der Klebemasse (30) parallel zur Aktivierung in Schritt (IV) oder in einem weiteren Schritt (V) erfolgt.

14. Falzverbindung erhältlich nach dem Verfahren nach mindestens einem der Ansprüche 1 bis 13.

15. Verwendung eines Klebebandes zur Herstellung einer mittels einer Klebemasse versiegelten Falzverbindung nach einem Verfahren der Ansprüche 1 bis 13.

16. Verwendung nach Anspruch 15 zur Herstellung einer Falzverbindung im Automobilbau, insbesondere bei der Karosserieherstellung.
